# EUROPÄISCHE PATENTSCHRIFT

(11) **EP 2 560 788 B1**
(45) Veröffentlichungstag und Bekanntmachung des Hinweises auf die Patenterteilung: **06.04.2022**
(21) Anmeldenummer: 11706219.0
(22) Anmeldetag: 25.02.2011
(51) Int. Cl.: B23Q 11/00, B24B 49/00, F16P 5/00, B24B 49/10, B24B 23/02

(54) **WINKELSCHLEIFER MIT DREHRATENSENSOR ZUR MESSUNG DER GEHÄUSEROTATION**
ANGLE GRINDER COMPRISING A YAW RATE SENSOR FOR MEASURING THE HOUSING ROTATION
MEULEUSE D'ANGLE POURVUE D'UN CAPTEUR DE VITESSE DE ROTATION POUR MESURER LA ROTATION DU BOÎTIER

(30) Priorität: 20.04.2010 DE 102010027981
(43) Veröffentlichungstag der Anmeldung: 27.02.2013
(73) Patentinhaber: Robert Bosch GmbH, 70442 Stuttgart (DE)
(72) Erfinder: KLEE, Christoph, 72622 Nuertingen (DE); FAISST, Hans-Joerg, 72138 Kirchentellinsfurt (DE)
(86) Internationale Anmeldenummer: PCT/EP2011/052778
(87) Internationale Veröffentlichungsnummer: WO 2011/131394

(56) Entgegenhaltungen:
- EP-A2- 1 201 373
- DE-A1-102004 046 000
- DE-A1-102007 062 727
- US-A1- 2006 081 386

## Beschreibung

### Stand der Technik

Es sind bereits Winkelschleifer mit einer Antriebseinheit zum Antrieb eines Einsatzwerkzeugs, mit einer Sensorvorrichtung zur Bereitstellung eines Rotationsparameters und mit einer Steuer- und/oder Regeleinheit, die dazu vorgesehen ist, den Rotationsparameter auszuwerten, um einen Klemmzustand des Einsatzwerkzeugs zu erkennen, bekannt. Aus der US 2006/081386 A1 ist zum Beispiel eine Schleifmaschine bekannt, mit einem Schleifgehäuse und mit einer Antriebseinheit zum Antrieb eines Einsatzwerkzeugs, mit einer Sensorvorrichtung zur Bereitstellung eines Rotationsparameters und mit einer Steuer- und Regeleinheit, die dazu eingerichtet ist, den Rotationsparameter auszuwerten, um einen Klemmzustand des Einsatzwerkzeugs zu erkennen, wobei die Sensorvorrichtung einen Drehratensensor aufweist, der dazu eingerichtet ist, in Abhängigkeit von einer Gehäuserotationsbewegung des Schleifgehäuses den Rotationsparameter bereitzustellen, wobei die Steuer- und Regeleinheit dazu eingerichtet ist, einen Sicherheitsmodus ab einem Rotationsparameter auszulösen.

### Offenbarung der Erfindung

Die Erfindung geht aus von einem Winkelschleifer mit einer Antriebseinheit zum Antrieb eines Einsatzwerkzeugs, mit einer Sensorvorrichtung zur Bereitstellung eines Rotationsparameters und mit einer Steuer- und/oder Regeleinheit, die dazu vorgesehen ist, den Rotationsparameter auszuwerten, um einen Klemmzustand des Einsatzwerkzeugs zu erkennen.

Es wird vorgeschlagen, dass die Sensorvorrichtung einen Drehratensensor aufweist, der dazu vorgesehen ist, in Abhängigkeit von einer Gehäuserotationsbewegung den Rotationsparameter bereitzustellen. Dadurch können eine Gehäuserotationsbewegung erfasst, eine für einen Bediener möglicherweise gefährliche Rotation des Winkelschleifergehäuses erkannt und Gegenmaßnahmen eingeleitet werden. Dabei ist es vorteilhafterweise möglich, den Drehratensensor beliebig in einem Winkelschleifergehäuse anzuordnen. Dadurch kann eine kostengünstige und einfache Montage des Winkelschleifers erreicht werden. Unter einem "Rotationsparameter" soll in diesem Zusammenhang insbesondere ein von der Sensorvorrichtung erfasstes elektrisches und/oder elektronisches Signal verstanden werden. Dabei detektiert die Sensorvorrichtung eine Drehrate des Winkelschleifergehäuses und gibt in Abhängigkeit einer Größe der Drehrate eine elektrische Spannung und/oder ein elektronisches Signal ab. Unter einer "Steuer- und/oder Regeleinheit" soll insbesondere eine Prozessoreinheit mit einer Speichereinheit und einem in der Speichereinheit gespeicherten Betriebsprogramm verstanden werden. Unter "vorgesehen" soll insbesondere speziell programmiert, ausgestattet und/oder ausgelegt verstanden werden. Unter einer "Gehäuserotationsbewegung" soll dabei insbesondere eine Rotationsbewegung eines Winkelschleifergehäuses um eine Hauptrotationsachse des Einsatzwerkzeugs verstanden werden. Unter "beliebig" soll in diesem Zusammenhang insbesondere an einer beliebigen Stelle innerhalb des Winkelschleifergehäuses befestigt verstanden werden, wobei die sensitive Achse des Drehratensensors parallel zu der Hauptrotationsachse des Einsatzwerkzeugs angeordnet sein muss.

Ferner wird vorgeschlagen, dass der Drehratensensor dazu vorgesehen ist, unabhängig von einer Beschleunigung der Gehäuserotationsbewegung den Rotationsparameter bereitzustellen. Dadurch kann auch eine unbeschleunigte Rotation des Winkelschleifergehäuses erkannt werden. Unter einer "Beschleunigung der Gehäuserotationsbewegung" soll dabei insbesondere eine Beschleunigung des Winkelschleifergehäuses um die Hauptrotationsachse des Einsatzwerkzeugs verstanden werden.

Es wird weiter vorgeschlagen, dass die Steuer- und/oder Regeleinheit dazu vorgesehen ist, in Abhängigkeit des von dem Drehratensensor bereitgestellten Rotationsparameters einen Sicherheitsmodus auszulösen. Dadurch kann gezielt auf die auftretende Gehäuserotationsbewegung reagiert und je nach Größe der Gehäuserotationsbewegung können Gegenmaßnahmen eingeleitet werden. Unter einem "Sicherheitsmodus" soll in diesem Zusammenhang insbesondere ein Betriebsmodus des Winkelschleifers verstanden werden, bei dem das Einsatzwerkzeug, das mit einer bestimmten Drehzahl rotiert, auf eine geringere Drehzahl abgebremst wird. Dabei soll eine "geringere Drehzahl" maximal 40% einer Ausgangsdrehzahl betragen.

Des Weiteren wird vorgeschlagen, dass die Steuer- und/oder Regeleinheit dazu vorgesehen ist, den Sicherheitsmodus erst ab einem definierten Wert des Rotationsparameters auszulösen. Dadurch werden ruckartige Stöße, die von dem Bediener selbst abgefangen werden, so dass das Winkelschleifergehäuse nicht anfängt zu rotieren, herausgefiltert. Es kann somit vorteilhaft erkannt werden, wenn der Bediener eine Gehäuserotationsbewegung selbst abfängt. Ein unnötiges Abschalten des Winkelschleifers kann so verhindert werden. Unter einem "definierten Wert" soll in diesem Zusammenhang insbesondere ein bestimmter Winkel verstanden werden, um den sich das Winkelschleifergehäuse pro Sekunde gedreht hat.

In einer besonders vorteilhaften Ausgestaltung werden in dem Sicherheitsmodus eine Drehzahl und/oder ein Drehmoment der Antriebseinheit sehr stark gedrosselt. Dadurch kann eine Gefährdung des Bedieners besonders einfach verhindert werden. Unter "sehr stark gedrosselt" soll in diesem Zusammenhang insbesondere auf null reduziert verstanden werden. Grundsätzlich kann aber auch eine Drehzahl von wenigen Umdrehungen pro Minute eingestellt werden. Dabei soll unter "wenigen Umdrehungen pro Minute" in diesem Zusammenhang Werte von unter 5 Umdrehungen pro Minute verstanden werden. Dabei wertet die Steuer- und/oder Regeleinheit die Drehrate des Winkelschleifergehäuses aus. Grundsätzlich kann die Steuer- und/oder Regeleinheit einen von der Drehrate abhängigen Wert auswerten und in dessen Abhängigkeit einen Sicherheitsmodus auslösen. Ein "von der Drehrate abhängiger Wert" kann beispielsweise eine Ableitung der Drehrate sein oder ein Wert, der sich aus einer Verknüpfung der Drehrate mit einem weiteren Betriebsparameter ergibt. Ein "weiterer Betriebsparameter" kann beispielsweise die Drehzahl des Einsatzwerkzeugs sein.

Weiter wird vorgeschlagen, dass der Drehratensensor eine sensitive Achse aufweist, die im Wesentlichen koaxial zu einer Hauptrotationsachse des Einsatzwerkzeuges orientiert ist. Dadurch kann eine Gehäuserotationsbewegung besonders einfach und akkurat erfasst werden. Unter einer "sensitiven Achse" soll dabei insbesondere die Hauptachse des Drehratensensors verstanden werden, um die der Drehratensensor eine Drehrate erfassen kann.

Ferner wird vorgeschlagen, dass der Drehratensensor unabhängig von einer Positionierung in einem Winkelschleifergehäuse den gleichen Rotationsparameter erfasst. Dadurch kann eine besonders einfache konstruktive Ausgestaltung des Winkelschleifers erreicht werden. Unter "Erfassung eines gleichen Rotationsparameters" soll dabei insbesondere verstanden werden, dass der Rotationsparameter bei einer gleichen Rotation des Winkelschleifergehäuses unabhängig von der Positionierung stets einen gleichen Wert aufweist.

Des Weiteren wird vorgeschlagen, dass die Antriebseinheit als eine ungeregelte Antriebseinheit ausgebildet ist. Dies ermöglicht eine kostengünstige Ausgestaltung des Winkelschleifers. Unter einer "ungeregelten Antriebseinheit" soll dabei insbesondere eine Antriebseinheit verstanden werden, die keine selbstständige Drehzahlregelung auf einen definierten Wert, insbesondere auf einen von einem Bediener einstellbaren Wert, aufweist.

Es wird weiter vorgeschlagen, dass die Steuer- und Regeleinheit dazu vorgesehen ist, den Sicherheitsmodus ab einem Rotationsparameter von 100 bis 500 Grad pro Sekunde auszulösen. Dadurch kann eine vom Bediener selbst abgefangene Rotation besonders einfach erkannt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

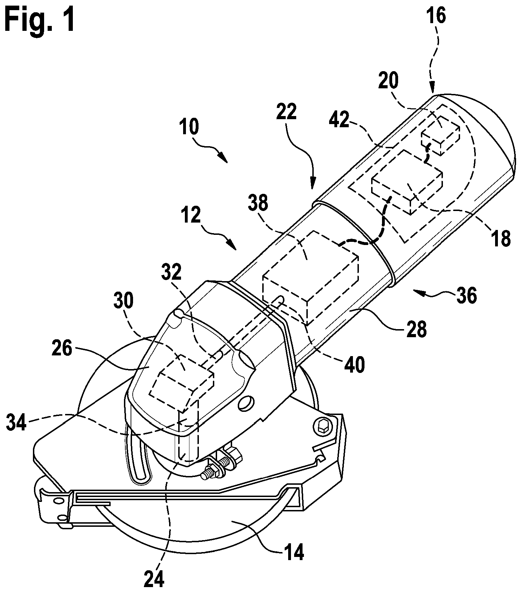

- Fig. 1: zeigt eine schematische Darstellung eines erfindungsgemäßen Winkelschleifers.

Figur 1 zeigt eine schematische Darstellung eines erfindungsgemäßen Winkelschleifers 10. Der Winkelschleifer 10 weist ein Einsatzwerkzeug 14 auf. Das Einsatzwerkzeug 14 ist als eine Trennscheibe ausgeführt, die eine Hauptrotationsachse aufweist. Das Einsatzwerkzeug 14 ist dazu vorgesehen, in einem angetriebenen Betriebszustand mit einem Werkstück spanend in Kontakt zu stehen. Das Einsatzwerkzeug 14 weist mittig ein nicht näher dargestelltes Aufnahmeloch auf.

Der Winkelschleifer 10 weist weiter eine nicht näher dargestellte Einsatzwerkzeugaufnahme und eine Antriebswelle 24 auf. Die Antriebswelle 24 ist drehfest mit der Einsatzwerkzeugbefestigung verbunden. Die Antriebswelle 24 weist eine Rotationsachse auf, die koaxial zu der Hauptrotationsachse des Einsatzwerkzeugs 14 angeordnet ist. Die Einsatzwerkzeugaufnahme ist parallel zu der Hauptrotationsachse des Einsatzwerkzeugs 14 orientiert. Die Einsatzwerkzeugaufnahme ist in einem montierten Zustand des Einsatzwerkzeugs 14 zumindest teilweise in dem Aufnahmeloch des Einsatzwerkzeugs 14 angeordnet.

Der Winkelschleifer 10 weist ein Winkelschleifergehäuse 22 auf. Das Winkelschleifergehäuse 22 umfasst ein Getriebegehäuse 26 und ein Motorgehäuse 28. Der Winkelschleifer 10 weist weiter ein Umlenkgetriebe 30 auf, das in dem Getriebegehäuse 26 angeordnet ist. Das Umlenkgetriebe 30 weist eine Eingangswelle 32 und eine Ausgangswelle 34 auf, die jeweils eine Rotationsachse aufweisen. Die Rotationsachse der Eingangswelle 32 und die Rotationsachse der Ausgangswelle 34 stehen orthogonal zueinander. Die Ausgangswelle 34 ist drehfest mit der Antriebswelle 24 verbunden. Das Getriebegehäuse 26 ist einstückig mit dem Motorgehäuse 28 ausgeführt.

Der Winkelschleifer 10 weist weiter einen Handgriff 36 auf. Der Handgriff 36 erstreckt sich mit seiner Haupterstreckungsrichtung parallel zu der Rotationsachse der Eingangswelle 32. Der Handgriff 36 ist mittels des Motorgehäuses 28 ausgebildet. Der Winkelschleifer 10 umfasst eine Motoreinheit 38, die in dem Motorgehäuse 28 angebracht ist. Die Motoreinheit 38 weist eine Motorwelle 40 auf. Die Motorwelle 40 ist drehfest mit der Eingangswelle 32 des Umlenkgetriebes 30 verbunden. Dadurch ist das Einsatzwerkzeug 14 mittels der Motoreinheit 38 über das Umlenkgetriebe 30 antreibbar.

Der Winkelschleifer umfasst weiter einen Steuer- und Regelkreis 42. Der Steuer- und Regelkreis 42 weist eine Sensorvorrichtung 16 und eine Steuer- und Regeleinheit 18 auf. Die Sensorvorrichtung 16 weist einen Drehratensensor 20 auf. Der Drehratensensor 20 ist in einem hinteren Bereich des Winkelschleifergehäuses 22 angeordnet. Eine sensitive Achse des Drehratensensors 20 ist parallel zu der Hauptrotationsachse des Einsatzwerkzeugs 14 ausgerichtet. Für die Funktion der Sensorvorrichtung 16 ist eine Positionierung des Drehratensensors 20 im Winkelschleifergehäuse 22 grundsätzlich beliebig.

Der Drehratensensor 20 erfasst eine Drehrate des Winkelschleifergehäuses 22. Der Drehratensensor 20 stellt in Abhängigkeit einer Gehäuserotationsbewegung einen Rotationsparameter bereit. Der Rotationsparameter ist als ein elektronisches Signal ausgebildet. Der Rotationsparameter beschreibt, um wie viele Winkelgrade sich das Winkelschleifergehäuse 22 pro Sekunde um die sensitive Achse dreht.

Der Rotationsparameter wird an die Steuer- und Regeleinheit 18 übermittelt. Die Steuer- und Regeleinheit 18 wertet den Rotationsparameter aus. Die Steuer- und Regeleinheit 18 weist eine Speichereinheit auf, auf der Rotationsparameterwerte hinterlegt sind. Die Steuer- und Regeleinheit 18 vergleicht den von der Sensorvorrichtung 16 erfassten Rotationsparameter mit den auf der Speichereinheit hinterlegten Rotationsparameterwerten.

Erkennt die Steuer- und Regeleinheit 18 durch Vergleichen des Rotationsparameters mit den in der Speichereinheit hinterlegten Rotationsparameterwerten eine für einen Bediener möglicherweise gefährliche Rotation des Winkelschleifergehäuses 22, löst die Steuer- und Regeleinheit 18 einen Sicherheitsmodus aus. Die Steuer- und Regeleinheit 18 löst ab einem Rotationsparameterwert zwischen 100 und 500 Grad pro Sekunde den Sicherheitsmodus aus. Das entspricht Werten zwischen 16,6 und 83,3 Umdrehungen pro Minute. Für die Auswertung des Rotationsparameters sind in der Steuer- und Regeleinheit 18 Algorithmen hinterlegt, die beispielsweise einen Klemmzustand anhand des Rotationsparameters erkennen.

In dem Sicherheitsmodus wird eine Motordrehzahl von der Steuer- und Regeleinheit 18 auf null reduziert. Die Motoreinheit 38 wird gestoppt. Grundsätzlich kann die Drehzahl der Motoreinheit 38 auch nur auf eine geringere Drehzahl gedrosselt werden, so dass das Winkelschleifergehäuse 22 nur noch in einem ungefährlichen Maße rotieren und der Bediener die Rotation selbst leicht abfangen kann. Grundsätzlich sind auch andere Verfahren zum Unterbinden der Rotation des Winkelschleifergehäuses 22 denkbar.

In einem Betriebszustand, in dem der Bediener ein Werkstück bearbeitet, steht das Einsatzwerkzeug 14 in spanendem Kontakt mit dem Werkstück. Unebenheiten im Werkstück und eine falsche Handhabung des Winkelschleifers 10 durch den Bediener können dazu führen, dass sich das Einsatzwerkzeug 14 in dem Werkstück verklemmt. Durch Verklemmen des Einsatzwerkzeugs 14 wird das Winkelschleifergehäuse 22 bei drehender Motoreinheit 38 in Rotation versetzt. Bringt der Bediener nur eine unzureichende oder keine Gegenkraft auf, die der Rotation entgegenwirkt, rotiert das Winkelschleifergehäuse. Die Sensorvorrichtung 16 erfasst den Rotationsparameter und übermittelt den Rotationsparameter an die Steuer- und Regeleinheit 18. Die Steuer- und Regeleinheit 18 vergleicht den eingehenden Rotationsparameter mit dem in der Speichereinheit hinterlegten Rotationsparameterwert. Überschreitet der Rotationsparameter den in der Speichereinheit hinterlegten Rotationsparameterwert für eine definierte Zeitspanne, erkennt die Steuer- und Regeleinheit 18 eine unerwünschte Rotation des Winkelschleifergehäuses 22, d.h. insbesondere eine Rotation, die vom Bediener nicht abgefangen wurde. Die Steuer- und Regeleinheit 18 löst dann den Sicherheitsmodus aus.

## Patentansprüche

1. Winkelschleifer mit einem Winkelschleifergehäuse (22) und mit einer Antriebseinheit (12) zum Antrieb eines Einsatzwerkzeugs (14) mit einer Sensorvorrichtung (16) zur Bereitstellung eines Rotationsparameters und mit einer Steuer- und/oder Regeleinheit (18), die speziell programmiert ist, den Rotationsparameter auszuwerten, um einen Klemmzustand des Einsatzwerkzeugs (14) zu erkennen, wobei die Sensorvorrichtung (16) einen Drehratensensor (20) aufweist, der dazu vorgesehen ist, in Abhängigkeit von einer Gehäuserotationsbewegung des Winkelschleifergehäuses (22) den Rotationsparameter bereitzustellen, wobei die Steuer- und Regeleinheit (18) speziell programmiert ist, einen Sicherheitsmodus ab einem Rotationsparameter von 100 bis 500 Grad pro Sekunde auszulösen, wobei der Drehratensensor (20) dazu vorgesehen ist, unabhängig von einer Beschleunigung der Gehäuserotationsbewegung den Rotationsparameter bereitzustellen.

2. Winkelschleifer nach Anspruch 1, wobei die Steuer- und/oder Regeleinheit (18) speziell programmiert ist, in Abhängigkeit des von dem Drehratensensor (20) bereitgestellten Rotationsparameters einen Sicherheitsmodus auszulösen.

3. Winkelschleifer nach Anspruch 2, wobei die Steuer- und/oder Regeleinheit (18) speziell programmiert ist, den Sicherheitsmodus erst ab einem definierten Wert des Rotationsparameters auszulösen.

4. Winkelschleifer nach Anspruch 2 oder 3, wobei in dem Sicherheitsmodus eine Drehzahl und/oder ein Drehmoment der Antriebseinheit (12) sehr stark gedrosselt wird.

5. Winkelschleifer nach einem der vorhergehenden wobei der Drehratensensor (20) eine sensitive Achse aufweist, die im Wesentlichen koaxial zu einer Hauptrotationsachse des Einsatzwerkzeuges (14) orientiert ist.

6. Winkelschleifer nach einem der vorhergehenden Ansprüche, wobei der Drehratensensor (20) unabhängig von einer Positionierung in einem Winkelschleifergehäuse (22) den gleichen Rotationsparameter erfasst.

7. Winkelschleifer nach einem der vorhergehenden Ansprüche, wobei die Antriebseinheit (12) keine selbständige Drehzahlregelung auf einen definierten Wert, insbesondere auf einen von einem Bediener eintellbaren Wert, aufweist, und somit als eine ungeregelte Antriebseinheit ausgebildet ist.

## Claims

1. Angle grinder comprising an angle grinder housing (22) and comprising a drive unit (12) for driving an insertion tool (14) having a sensor device (16) for providing a rotation parameter, and comprising a control and/or regulating unit (18) which is specifically programmed to evaluate the rotation parameter in order to detect a jammed state of the insertion tool (14), wherein the sensor device (16) has a yaw rate sensor (20) to provide the rotation parameter as a function of a housing rotational movement of the angle grinder housing (22), wherein the control and regulating unit (18) is specifically programmed to trigger a safety mode beginning at a rotation parameter of 100 to 500 degrees per second, wherein the yaw rate sensor (20) is provided to provide the rotation parameter irrespective of an acceleration of the housing rotational movement.

2. Angle grinder according to Claim 1, wherein the control and/or regulating unit (18) is specifically programmed to trigger a safety mode as a function of the rotation parameter provided by the yaw rate sensor (20).

3. Angle grinder according to Claim 2, wherein the control and/or regulating unit (18) is specifically programmed to trigger the safety mode only beginning at a defined value of the rotation parameter.

4. Angle grinder according to Claim 2 or 3, wherein in the safety mode, a rotational speed and/or a torque of the drive unit (12) is throttled very highly.

5. Angle grinder according to one of the preceding claims, wherein the yaw rate sensor (20) has a sensitive axis which is oriented substantially coaxially with a main axis of rotation of the insertion tool (14).

6. Angle grinder according to one of the preceding claims, wherein the yaw rate sensor (20) detects the same rotation parameter irrespective of the positioning in an angle grinder housing (22).

7. Angle grinder according to one of the preceding claims, wherein the drive unit (12) has no independent rotational speed regulation to a defined value, in particular to a value that can be adjusted by an operator, and is therefore formed as an unregulated drive unit.

## Revendications

1. Meuleuse d'angle comprenant un boîtier de meuleuse d'angle (22) et une unité d'entraînement (12) destinée à entraîner un outil d'insertion (14) et pourvue d'un dispositif de détection (16) destiné à fournir un paramètre de rotation et d'une unité de commande et/ou de régulation (18) qui est spécialement programmée pour évaluer le paramètre de rotation afin de détecter un état serré de l'outil d'insertion (14), le dispositif de détection (16) comportant un capteur de vitesse de rotation (20) qui est prévu pour fournir le paramètre de rotation en fonction d'un mouvement de rotation du boîtier de meuleuse d'angle (22), l'unité de commande et de régulation (18) étant spécialement programmée pour déclencher un mode de sécurité à partir d'un paramètre de rotation de 100 à 500 degrés par seconde, le capteur de vitesse de rotation (20) étant prévu pour fournir le paramètre de rotation indépendamment d'une accélération du mouvement de rotation du boîtier.

2. Meuleuse d'angle selon la revendication 1, l'unité de commande et/ou de régulation (18) étant spécialement programmée pour déclencher un mode de sécurité en fonction du paramètre de rotation fourni par le capteur de vitesse de rotation (20).

3. Meuleuse d'angle selon la revendication 2, l'unité de commande et/ou de régulation (18) étant spécialement programmée pour déclencher le mode de sécurité uniquement à partir d'une valeur définie du paramètre de rotation.

4. Meuleuse d'angle selon la revendication 2 ou 3, dans le mode de sécurité, une vitesse de rotation et/ou un couple de l'unité d'entraînement (12) étant très fortement réduits.

5. Meuleuse d'angle selon l'une des revendications précédentes, le capteur de vitesse de rotation (20) comportant un axe sensible qui est orienté sensiblement coaxialement à un axe de rotation principal de l'outil d'insertion (14).

6. Meuleuse d'angle selon l'une des revendications précédentes, le capteur de vitesse de rotation (20) détectant le même paramètre de rotation indépendamment d'un positionnement dans un boîtier de meuleuse d'angle (22) .

7. Meuleuse d'angle selon l'une des revendications précédentes, l'unité d'entraînement (12) ne comportant pas de régulation de vitesse de rotation autonome à une valeur définie, en particulier à une valeur qui peut être réglée par un opérateur, et étant ainsi conçue comme une unité d'entraînement non régulée.
